# EUROPEAN PATENT APPLICATION

(11) **EP 2 660 956 A1**
(43) Date of publication of application: **06.11.2013**
(21) Application number: 11854308.1
(22) Date of filing: 20.12.2011
(51) Int. Cl.: H02K 3/04

(54) **ROTATING ELECTRICAL MACHINE**

(30) Priority: 28.12.2010 JP 2010291549
(71) Applicant: Hitachi Automotive Systems, Ltd., Hitachinaka-shi Ibaraki 312-8503 (JP)
(72) Inventor: KAIMORI, Tomoaki, Hitachinaka-shi Ibaraki 312-8503 (JP); MORI, Yoshimi, Hitachinaka-shi Ibaraki 312-8503 (JP); OHMORI, Takahiro, Hitachinaka-shi Ibaraki 312-8503 (JP); NAKAYAMA, Kenichi, Hitachinaka-shi Ibaraki 312-8503 (JP); ISHIDA, Sakae, Hitachinaka-shi Ibaraki 312-8503 (JP); MATSUO, Takeshi, Hitachinaka-shi Ibaraki 312-8503 (JP); SAITO, Yasuyuki, Hitachinaka-shi Ibaraki 312-8503 (JP)
(74) Representative: MERH-IP Matias Erny Reichl Hoffmann
(86) International application number: PCT/JP2011/079524
(87) International publication number: WO 2012/090792

(57) **Abstract**

A rotating electrical machine includes: a stator that includes a stator iron core having a plurality of slots and a stator winding configured by connecting a plurality of segment conductors each formed by a rectangular wire including an end portion and an insulating film; and a rotator that faces the stator through a gap, wherein the segment conductor includes a coated portion coated with the insulating film and a peel-off portion from which the insulating film is peeled off and has a cross-section smaller than the coated portion, the segment conductor and another segment conductor are bonded to each other outside the slots so as to bring at least parts of the peel-off portions as bonding faces into contact with each other, at least one segment conductor of the bonded segment conductors includes a straight portion that is formed in a linear shape in an axial direction and an arc portion that is continuous to the straight portion, and the bonding face is configured by the straight and the arc portion, or the straight portion and a part of the arc portion on a side of the straight portion.

## Description

### Technical Field

The present invention relates to a rotating electrical machine, and more particularly, to a segment conductor of a stator of a rotating electrical machine.

### Background Art

Rotating electrical machines used for driving vehicles have been required to have a decreased size and a high output. For the purpose of improving a space factor and an output of a rotating electrical machine, a rectangular wire has been used, and a winding system using a rectangular wire segment has been used.

In the winding system, a segment conductor of a rectangular wire molded in the shape of U is inserted into a stator iron core, and a straight potion of the segment conductor, which protrudes from a stator iron core, is twisted in the circumferential direction, whereby segment conductors arranged in mutually-different slots are connected to each other. At this time, in both end portions of the segment conductor molded in the shape of U, an insulator such as an enamel film is peeled off in advance, and the end portion is bonded to a segment conductor arranged in another slot through welding or the like.

In PTL 1, by arranging an end portion and a peel-off portion in an inclined portion, the insulator is peeled off up to a position at which the stator iron core is located, and accordingly, a heat-dissipating area is wide, and the height of a coil end can be lowered.

### Citation List

### Patent Literature

PTL 1: Japanese Patent Application Laid-Open No. 2008-199751

### Summary of Invention

### Technical Problem

For example, in the method disclosed in PTL 1, corner portions of peel-off portions of a coil, which are to be bonded, need to be aligned with each other, and a welded potion is deviated due to absence of a face at the apex when TIG welding or the like is performed, whereby there is a problem in that it is difficult to acquire high stability. Thus, an object of the present invention is to improve the reliability of a rotating electrical machine by improving the stability of the bonding portion of the coil.

### Solution to Problem

According to a first aspect of the present invention, a rotating electrical machine includes: a stator that includes a stator iron core having a plurality of slots and a stator winding configured by connecting a plurality of segment conductors each formed by a rectangular wire including an end portion and an insulating film; and a rotator that faces the stator through a gap, wherein the segment conductor includes a coated portion coated with the insulating film and a peel-off portion from which the insulating film is peeled off and has a cross-section smaller than the coated portion, the segment conductor and another segment conductor are bonded to each other outside the slots so as to bring at least parts of the peel-off portions as bonding faces into contact with each other, at least one segment conductor of two segment conductors that are bonded to each other includes a straight portion that is formed in a linear shape in an axial direction and an arc portion that is continuous to the straight portion and is formed in an arc shape in the end portion, and the peel-off portion as the bonding face is configured by the straight portion and the arc portion, or the straight portion and a part of the arc portion on a side of the straight portion.
According to a second aspect of the present invention, in the rotating electrical machine of the first aspect, it is preferable that the segment conductor including the arc portion includes an inclined portion that is continuous to the arc portion and is formed to extend in a direction different from a direction of the straight portion, and the peel-off portion as the bonding face is configured by the straight portion, the arc portion and the inclined portion, or the straight portion, the arc portion and a part of the inclined portion on a side of the arc portion.
According to a third aspect of the present invention, in the rotating electrical machine of the first or second aspect, it is preferable that, in the segment conductor bonded to the segment conductor including the arc portion, the coated portion and the peel-off portion are formed in a linear shape in the axial direction in a welding-side coil end.
According to a fourth aspect of the present invention, in the rotating electrical machine of the second aspect, it is preferable that the segment conductor including the inclined portion is a connecting wire and connects two segment conductors other than the segment conductor.
According to a fifth aspect of the present invention, in the rotating electrical machine of any one of the first to fourth aspects, it is preferable that a peel-off length of a face other than the bonding face is shorter than a peel-off length of the bonding face.
According to a sixth aspect of the present invention, in the rotating electrical machine of the fifth aspect, it is preferable that the peel-off portions are disposed on the bonding faces on which the peel-off portions face each other and other faces parallel to the bonding faces.

### Advantageous Effects of Invention

According to the present invention, the reliability of a rotating electrical machine can be improved by improving the stability of bonding between segment conductors.

### Brief Description of Drawings

[FIG. 1] FIG. 1 is a diagram illustrating a schematic configuration of a hybrid-type electric vehicle in which a rotating electrical machine is mounted.
[FIG. 2] FIG. 2 is a cross-sectional view of the rotating electrical machine illustrated in FIG. 1.
[FIG. 3] FIG. 3 is a cross-sectional view of a stator and a rotator illustrated in FIG. 2.
[FIG. 4] FIG. 4 is a perspective view of the stator illustrated in FIG. 2.
[FIG. 5] FIG. 5 is a diagram illustrating a method of peeling off an end portion of a rectangular wire.
[FIG. 6] FIG. 6 is a diagram illustrating a peel-off shape.
[FIG. 7] FIG. 7 is a diagram illustrating a conventional peel-off shape.
[FIG. 8] FIG. 8 is a diagram illustrating a peel-off shape in a case where the other coil is not formed to be twisted.
[FIG. 9] FIG. 9 is a diagram illustrating bonding between a neutral line and a connecting wire.

### Description of Embodiments

An embodiment of the present invention in a case where a rotating electrical machine according to the present invention is applied to a hybrid vehicle will be described as an example.

### [First Embodiment]

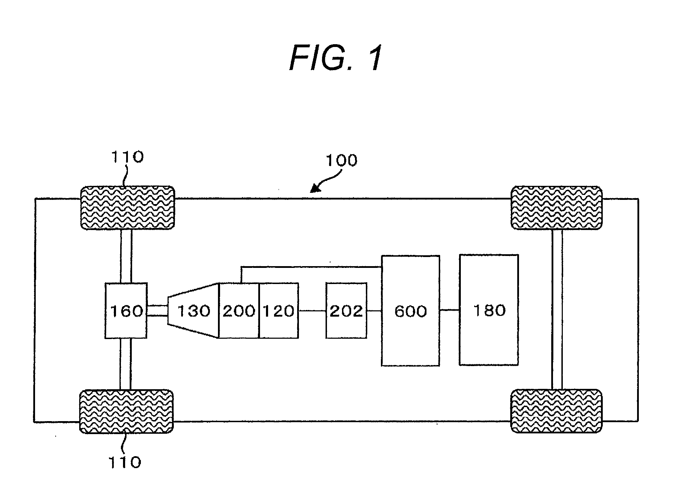

As illustrated in FIG. 1, in a hybrid vehicle 100, an engine 120, first and second rotating electrical machines 200 and 202, and a high-voltage battery 180 are mounted.

The battery 180 is configured as a secondary battery such as a lithium ion battery or a nickel-metal hydride battery, and outputs high-voltage DC power of 250 volts to 600 volts or higher. When driving forces supplied from the rotating electrical machines 200 and 202 are necessary, the battery 180 supplies DC power to the rotating electrical machines 200 and 202. At the time of regeneration driving, DC power is supplied from the rotating electrical machines 200 and 202 to the battery 180. The transmission/reception of DC power between the battery 180 and the rotating electrical machines 200 and 202 are performed through a power converting device 600.

Although not illustrated in the figure, a battery that supplies low-voltage power (for example, 14 volts-based power) is mounted in the vehicle.

The rotating torque according to the engine 120 and the rotating electrical machines 200 and 202 is delivered to front wheels 110 through a transmission 130 and a differential gear 160.

Since the rotating electrical machines 200 and 202 are configured to be substantially similar to each other, hereinafter, representatively, the rotating electrical machine 200 will be focused in description.

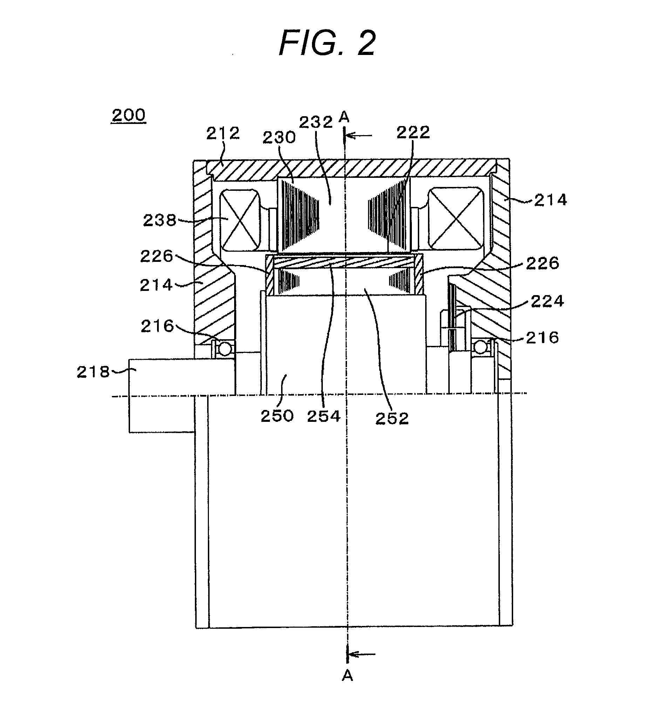

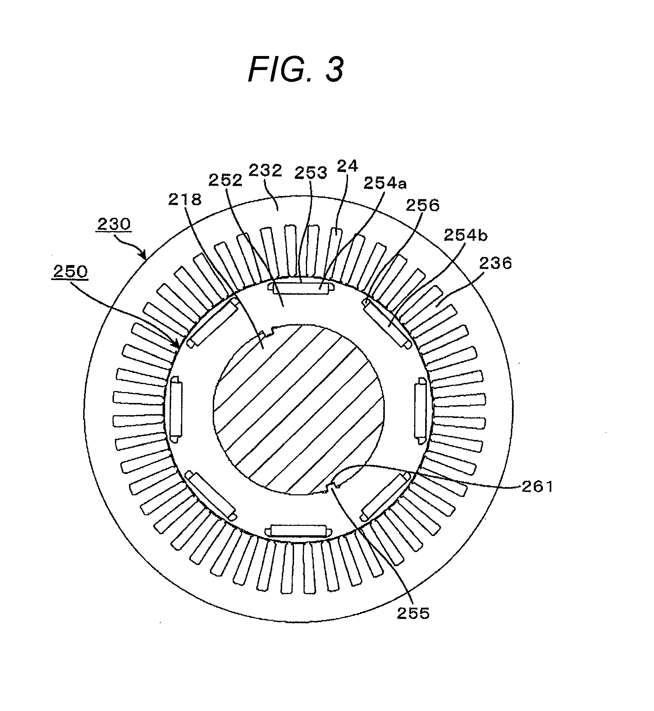

As illustrated in FIG. 2, the rotating electrical machine 200 includes a housing 212 and a stator 230 that is held inside the housing 212. The stator 230 includes a stator iron core 232 and a stator winding 238. On the inner side of the stator iron core 232, a rotator 250 is held so as to be rotatable through a gap 222. The rotator 250 includes a rotator iron core 252, a permanent magnet 254, and a cover plate 226 of a non-magnetic body. The rotator iron core 252 is fixed to a shaft (rotation shaft body) 218 having a cylindrical shape. Hereinafter, a direction along the rotation shaft will be referred to as an "axial direction", a rotation direction around the rotation shaft as the center will be referred to as a "circumferential direction", and a radial direction (for example, a direction from the rotation shaft toward the permanent magnet 254 in FIG. 3) from the rotation shaft to the circumference will be referred to as a "diameter direction".

The housing 212 includes a pair of end brackets 214 in which bearings 216 are disposed, and the shaft 218 is held by the bearings 216 to be rotatable. In the shaft 218, a resolver 224 that detects the position of the pole and the rotation speed of the rotator 250 is disposed.

FIG. 3 is a cross-section taken along line A-A illustrated in FIG. 2. In FIG. 3, the housing 212 and the stator winding 238 are not illustrated. In FIG. 3, on the inner circumferential side of the stator iron core 232, multiple slots 24 and teeth 236 are arranged uniformly over the entire circumference. Inside the slot 24, slot insulation (not illustrated in the figure) is disposed, and windings of a plurality of phases u to w configuring the stator winding 238 are installed. In this embodiment, as a method of winding the stator winding 238, distributed winding is employed.

In FIG. 3, representatively, reference numerals are assigned to some teeth and slots instead of being assigned to all the slots and teeth.

The distributed winding is a winding system in which phase windings are wound around the stator iron core 232 such that the phase windings are housed in two slots separated from each other over a plurality of slots 24. In this embodiment, since the distributed winding is employed as the winding system, a formed magnetic flux distribution is close to a sinusoidal wave form, and magnetic reluctance torque can be easily acquired. Accordingly, a wide range of the number of rotations from a low rotation speed to a high rotation speed can be controlled by utilizing weak field control and reluctance torque, and it is appropriate to acquire motor characteristics of electric vehicles and the like.

In the rotator iron core 252, rectangle-shaped holes 253 are formed, and permanent magnets 254a and 254b (hereinafter, representatively, 254) are buried and fixed using an adhesive or the like in the hole 253. The width of the hole 253 in the circumferential direction is set to be larger than the width of the permanent magnet 254 in the circumferential direction. In both end portions of the hole 253 in the circumferential direction, magnetic gaps 256 are formed at positions facing both end portions of the permanent magnet 254 in the circumferential direction. In the magnetic gap 256, an adhesive may be buried, or the permanent magnet 254 may be integrally hardened using a molding resin. The permanent magnet 254 acts as field poles of the rotator 250.

The magnetization direction of the permanent magnet 254 is toward the diameter direction, and the magnetization direction is reversed for every field pole. In other words, when the stator-side face of the permanent magnet 254a is the N pole and the shaft-side face is the S pole, the stator-side face of the neighbor permanent magnet 254b is the S pole and the shaft-side face is the N pole. Such permanent magnets 254a and 254b are alternately arranged in the circumferential direction. In this embodiment, eight permanent magnets 254 are arranged to be equally spaced, and the rotator 250 has eight poles.

On the inner circumferential face of the rotator iron core 252, keys 255 protrude at a predetermined gap. On the other hand, on the outer circumferential face of the shaft 218, key grooves 261 are disposed to be concave. The keys 255 are fitted to the key grooves 261 as loose fit, whereby rotating torque is delivered from the rotator 250 to the shaft 218.

The permanent magnets 254 may be buried in the rotator iron core 252 after being magnetized. Alternatively, after the permanent magnets 254 before magnetization are inserted into the rotator iron core 252, a strong magnetic field may be applied thereto for the magnetization. The permanent magnets 254 after the magnetization are strong magnets, and, when the magnets are magnetized before the fixation of the permanent magnets 254 to the rotator 250, a strong attractive force is generated at the time of fixing the permanent magnets 254 between the permanent magnets 254 and the rotator iron core 252, and the attractive force disturbs the operation. In addition, garbage such as iron powers may be attached to the permanent magnets 254 in accordance with the strong attractive force. Accordingly, in order to improve the productivity of the rotating electrical machine, it is preferable that the permanent magnets 254 be magnetized after being inserted into the rotator iron core 252.

In the description presented above, while both the rotating electrical machines 200 and 202 are configured in accordance with the first embodiment, one of the rotating electrical machines 200 and 202 may be configured in accordance with the first embodiment, and the other may employ another configuration.

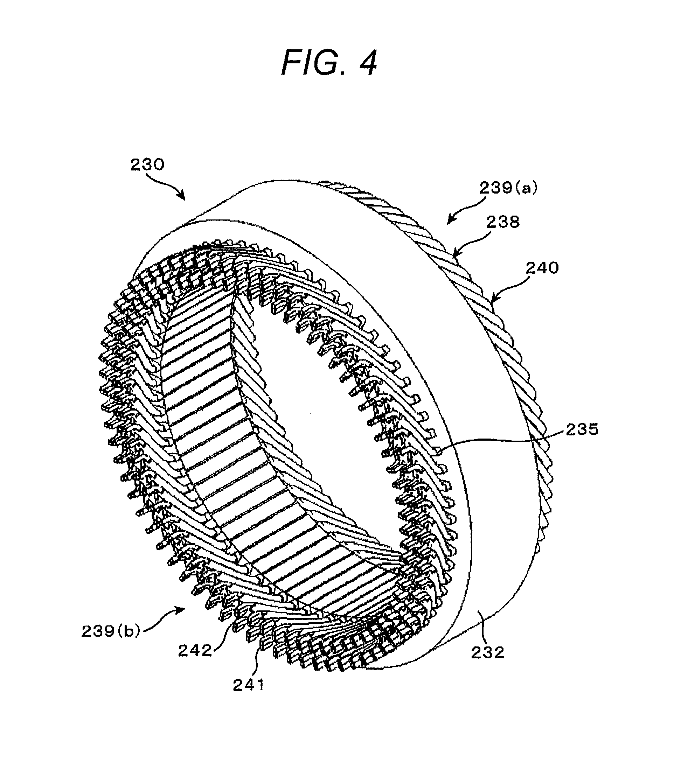

FIG. 4 is a perspective view of the stator 230 illustrated in FIGS. 2 and 3. The stator winding 238 is a rectangular wire, and, in the rectangular wire of this embodiment, a U-shaped portion (turning portion) 240 is molded by using a mold or the like in advance and is inserted into the stator iron core 232 including the slot insulation 235 in the axial direction. At this time, two straight portions are inserted into two slots separated from each other over the plurality of slots 24, respectively. In FIG. 4, a welding-side coil end group 239(b) is a diagram after twisted molding, and a lead wire and a neutral line are not illustrated in the figure.

The above-described embodiment is merely an example, and any other method may be used. For example, after the rectangular wire is molded in a simple U-shaped pattern, with one straight portion being used as a reference, the other straight portion is widened by a predetermined gap in the circumferential direction so as to perform twisted molding. After the molding, the straight portion is inserted into the slot 24 of the stator iron core 232 in the axial direction as described above. In such a case, the U-shaped portion 240 of the stator winding 238 is not molded by using a mold, but is molded by being twisted.

In any method described above, after the insertion, coil end groups 239(a) and (b) are formed in both ends of the stator iron core 232, the coil end group 239(a) is the U-shaped portion 240 (turning portion), and the coil end group 239(b) is the welding side and is formed in the shape of a straight line. In this embodiment, by twisting the coil end group 239(b) in the circumferential direction, the coil end group 239(b) illustrated in FIG. 4 is formed. At this time, a coil end portion 241 is molded so as to have an substantially linear shape in the axial direction.

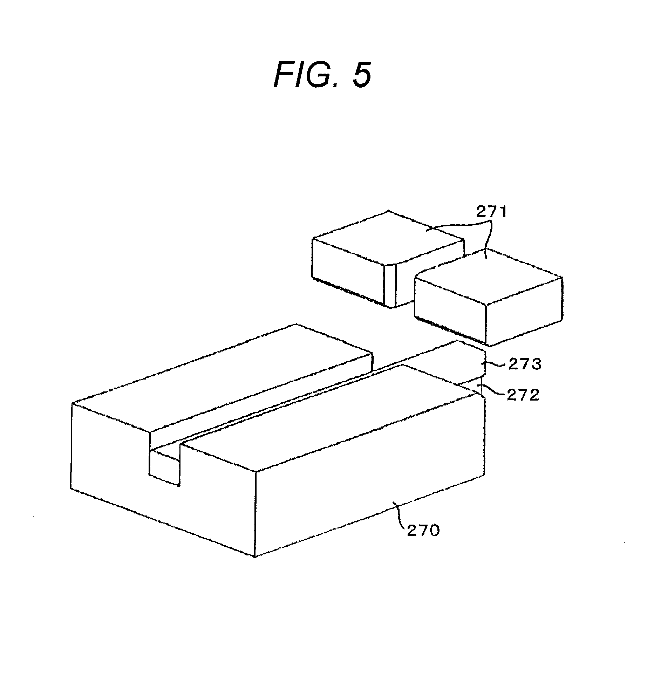

The coil end portion 241 includes a peel-off portion 242 in which the insulating film of both end portions is peeled off. The insulating film of both end portions is peeled off before the coil end portion 241 is inserted into the stator iron core 232. In this embodiment, although the insulating film is peeled off using a mold that uses a blade as a peeling-off method illustrated in FIG. 5, another peeling-off method using a cutter or the like may be used. However, in order to reliably peel off the insulating film, the insulating film is peeled off together with the peel-off portion. In a case where any peeling-off method is used, a peel-off length is configured to be longer than a straight portion 244 of the coil end portion 241.

In this embodiment illustrated in FIG. 5, the rectangular wire 273 molded in the U shape or the rectangular wire 273 before molding passes through a guide 270 that fixes the position at the time of peel-off. In the end of the guide 270, an upper mold 271 and a lower mold 272 are arranged, and, by pressing the upper mold 271 downward, the insulating film including the peel-off portion of the rectangular wire 273 is removed so as to form the peel-off portion 242. In such a case, the peel-off portion is formed to be thinner than a coated portion including the insulating film.

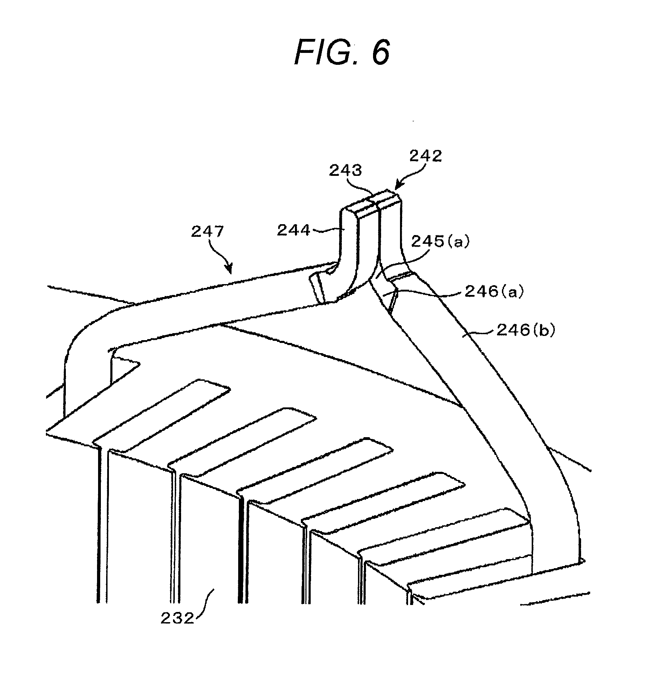

FIG. 6 illustrates a state after twisted molding of one set of coils bonded to the coil end group 239(b). In the end portion of each coil, the peel-off portion 242 is disposed.

In addition to a bonding portion 243 and the straight portion 244, the peel-off portion 242 is configured as an arc portion 245(a) from which the insulating film is peeled off or a part of the arc portion 245(a) from which the insulating film is peeled off. The bonding portion 243 is bonded to the bonding portion 243 of the segment conductor as a bonding opponent by TIG welding or the like. At this time, two segment conductors are bonded such that at least part of the peel-off portion of face (bonding faces) facing the bonding opponent of four faces of the rectangular wire of one segment conductor is brought into contact with that of the other segment conductor.

The straight portion 244 extends in the axial direction. The arc portion 245(a) connects the straight portion 244 and an inclined portion 246(b) that is a coated portion. In addition, the arc portion 245(a) may be configured so as to connect the straight portion 244 and the inclined portion 246(a) from which the insulating film is peeled off. In such a case, the peel-off portion 242 is configured by the bonding portion 243, the straight portion 244, the arc portion 245(a), and the inclined portion 246(a) from which the insulating film is peeled off. The inclined portions 246(a) and 246(b) extend in a direction different from the direction of the straight portion 244 and connect the arc portion 245(a) and a protruded portion protruding from the slot 24 in the axial direction. The length of the peel-off portion 242 is determined mainly in the peel-off process. The length of the peel-off portion 242 described here is a length from the bonding portion 243 to the coated portion in the longitudinal direction (a direction along the coil).

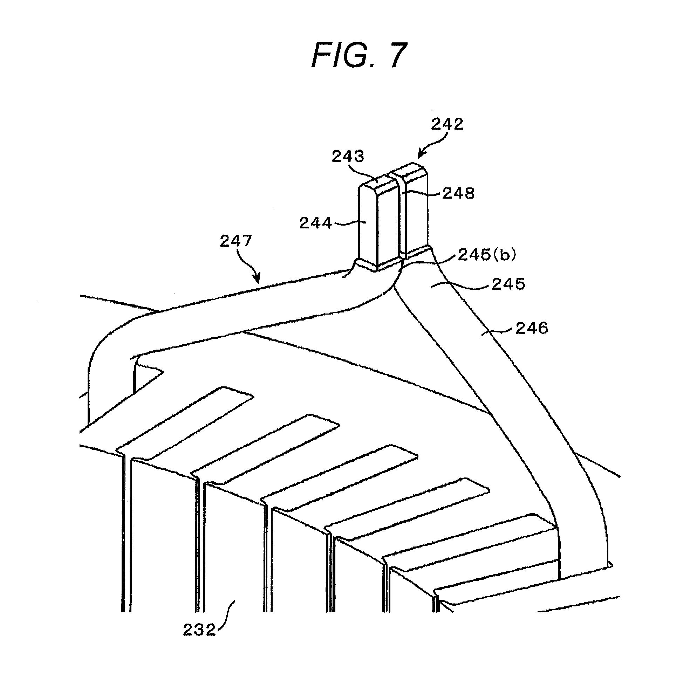

When coils are bonded, the stability or the reliability of the bonding portion 243 can be easily secured in a case where the peel-off portions 242 are brought into contact with each other, and accordingly, the peel-off portions 242 need to be disposed to be close to each other as possibly as can or be brought into contact with each other. For example, as illustrated in FIG. 7, in a case where the insulating film of only the straight portion 244 is peeled off, the peel-off portion 242 becomes thinner than the coated portion 247 including the insulating film. Accordingly, the arc portions 245(b) that are parts of the coated portions 247 interfere with each other, and accordingly, a gap 248 is formed in the bonding portion 243. Thus, it is difficult to bring the peel-off portions 242 into contact with each other, and it is necessary to deform the peel-off portions to be in contact with each other or to bring the peel-off portions close to each other. In a case where bonding is performed in this state, strong residual stress is generated in the bonding portions 243, whereby the reliability is lowered. In a case where the rectangular wire is thick, it is difficult to deform the peel-off portions, and accordingly, it is difficult to bring the peel-off portions to be close to each other.

In addition to the above-described problems, since the amount of heat at the time of performing welding through TIG welding or the like is very large, there is a possibility that the insulating film is damaged in a case where the peel-off distance is short. In order to avoid the damage, it is necessary to take a sufficient peel-off distance, and the length of the straight portion 244 in the longitudinal direction is long, whereby the height of the coil end becomes high.

In the peel-off shape of this embodiment illustrated in FIG. 6, as the insulating film of the arc portion 245(b), which is an interference portion as illustrated above, is peeled off, the peel-off portions 242 can be brought into contact with each other without generating a gap in the bonding portion 243. Accordingly, the bonding can be stabilized, and the reliability can be improved. In addition, since the peeling-off is performed up to the insulating film of the arc portion, it is easy to secure a sufficient peel-off length in the longitudinal direction. As a result, the insulating film can be prevented from being damaged due to welding, and the straight portion 244 can be shortened, whereby the coil end is lowered. In addition, since faces (vertical side faces) adjacent to the faces on which the peel-off portions 242 face each other have no relation to the interference, the peel-off distance can be shortened, whereby the insulating property is improved.

In the peel-off portion 242 illustrated in FIG. 6, while the peel-off shapes of faces on which the peel-off portions face each other and side faces perpendicular to the faces on which the peel-off portions 242 face each other are configured to be the same, in order to avoid the interference thereof, the peel-off shape according to this embodiment may be applied only to the faces on which the peel-off portions face each other. In such a case, the peel-off shape of the other faces may be peeled off so as not to cause any damage of the insulating film at the time of bonding depending on the bonding method.

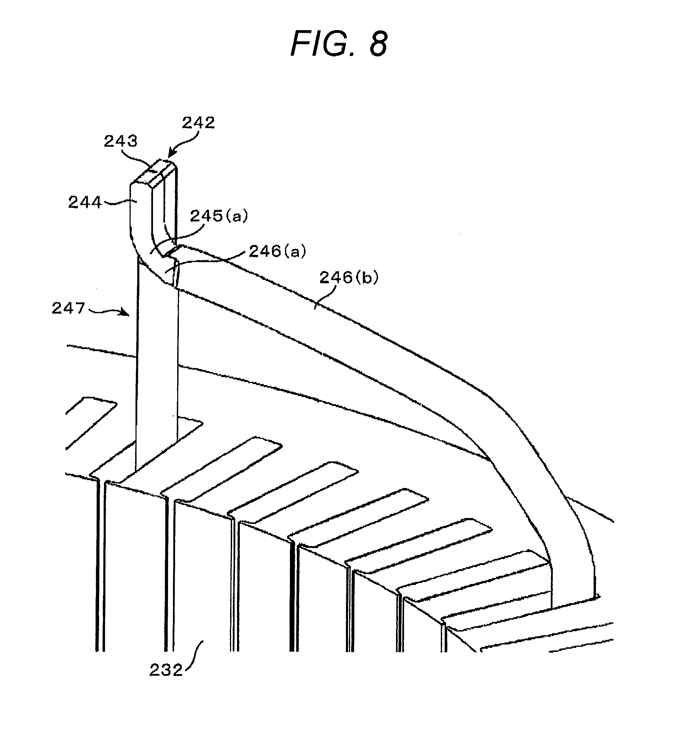

In the description presented above, while the coils twisted by the same pitch have been described, the present invention can be applied to coils having mutually different pitches depending on the coils. In addition, the present invention can be applied to a case where one coil is molded to be twisted, and the other coil is a coil having the shape of a straight line for which twisted molding is not performed. In such a case, as illustrated in FIG. 8, the peel-off shape according to this embodiment is applied to the coil that is molded to be twisted. In this case, a peel-off portion 242 of a segment conductor disposed on the inner side of the sheet face of FIG. 8, in other words, a segment conductor that is formed in the shape of a straight line in the welding-side coil end group 239(b) and does not include the arc portion 245(a) may be peeled off to a degree for which the insulating film is not damaged at the time of bonding.

### [Second Embodiment]

Another embodiment of the present invention will be described.

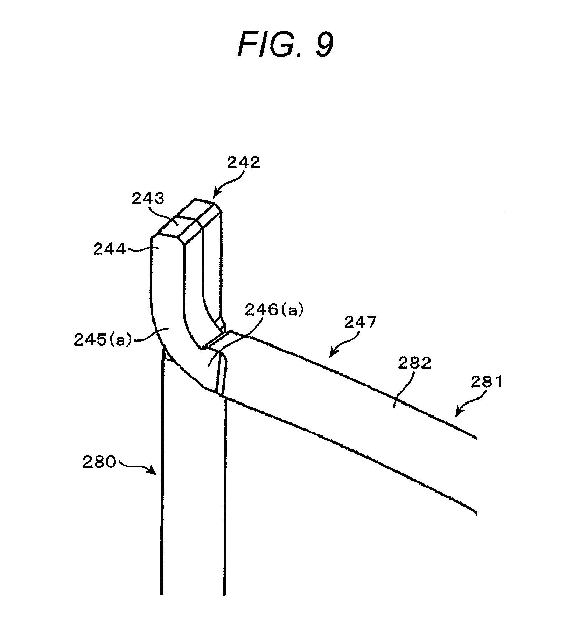

FIG. 9 is a diagram in which neutral lines are connected to each other using a rectangular wire having substantially the same diameter. The connection illustrated in the figure may be arranged in any one of the coil end groups 239(a) and (b) illustrated in FIG. 4.

In the example illustrated in FIG. 9, in order to connect a neutral line 280 and a neutral line protruding from another slot, a rectangular wire that is similar to the stator winding 238 is connected as a connecting wire 281. In such a case, the peel-off shape of the end portion of the connecting wire 281, as illustrated in the first embodiment described above, includes a peel-off portion 242 that is peeled off up to the straight portion 244, the arc portion 245(a) connecting the straight portion 244 and a connecting part 282 or a part of the arc portion 245(a). In addition, the peel-off portion 242 may include a part of the connecting part 282.

The peel-off portion 242 is arranged also in the connecting wire 281. As a result, when the length of the peel-off portion 242 of the neutral line 280 is sufficiently arranged, the coated portions 247 do not interfere with each other, and the peel-off portions 242 can be brought into contact with each other.

As above, the connecting wire 281 is used for the connection between the neutral lines 280, and the bonding portions 243 are arranged in the peel-off portions 242 and are bonded through TIG welding or the like, whereby a connection having high stability and high reliability can be made.

In addition, also in this embodiment, in the peel-off portion 242, while the peel-off shapes of faces on which the peel-off portions 242 face each other, faces parallel thereto, and side faces perpendicular to the faces on which the peel-off portions 242 face each other are configured to be the same, in order to avoid the interference thereof, the peel-off shape according to this embodiment may be applied only to the faces on which the peel-off portions face each other. In such a case, the peel-off shape of the other faces may be peeled off so as not to cause any damage of the insulating film at the time of bonding depending on the bonding method.

In the description presented above, while the connection between the neutral lines has been described as an example, this embodiment can be applied to a case where rectangular wires having a substantially same diameter are used so as to connect coils protruding from mutually-different slots. In addition, in this embodiment, while the neutral line 280 is illustrated in the shape of a straight line, the shape of the neutral line 280 is not limited at all.

By configuring as described above, according to the second embodiment, similarly to the first embodiment, the stability of the conductor bonding portion can be improved. In addition, according to this embodiment, the reliability of the connection of the neutral line is improved, and accordingly, the fracture of the connection portion of the neutral line can be suppressed. Although, in a case where the fracture of the neutral line occurs, the rotating electrical machine itself may be inoperative, in this embodiment, the fracture of the neutral line is suppressed, whereby the reliability of the rotating electrical machine can be significantly improved.

By using a rectangular line enabling high output and a decrease in the size, the rotating electrical machine according to each embodiment, for example, is appropriate as a drive motor of an electric vehicle. In addition, the rotating electrical machine can be applied to a pure electric vehicle that is driven only by the rotating electrical machine or a hybrid vehicle that is driven by both an engine and the rotating electrical machine.

A motor for driving a vehicle has been described above as an example, the present invention is not limited to the motor for driving a vehicle and may be applied to various motors. In addition, the present invention is not limited to the motor and may be applied to various rotating electrical machines such as a power generator and the like. In addition, the present invention is not limited to the above-described embodiments at all as long as the features of the present invention are maintained.

In the description presented above, while various embodiments and modified examples have been described, the present invention is not limited to such contents. Other aspects considered within the scope of the technical idea of the present invention also belong to the scope of the present invention.

The entire contents of the following application on which priority is based are incorporated herein by reference.
Japanese Patent Application No. 2010-291549 (Filed on December 28, 2010)

## Claims

1. A rotating electrical machine comprising:
a stator that includes a stator iron core having a plurality of slots and a stator winding configured by connecting a plurality of segment conductors each formed by a rectangular wire including an end portion and an insulating film; and
a rotator that faces the stator through a gap,
wherein the segment conductor includes a coated portion coated with the insulating film and a peel-off portion from which the insulating film is peeled off and has a cross-section smaller than the coated portion,
the segment conductor and another segment conductor are bonded to each other outside the slots so as to bring at least parts of the peel-off portions as bonding faces into contact with each other,
at least one segment conductor of two segment conductors that are bonded to each other includes a straight portion that is formed in a linear shape in an axial direction and an arc portion that is continuous to the straight portion and is formed in an arc shape in the end portion, and
the peel-off portion as the bonding face is configured by the straight portion and the arc portion, or the straight portion and a part of the arc portion on a sided of the straight portion.

2. The rotating electrical machine according to claim 1,
wherein the segment conductor including the arc portion includes an inclined portion that is continuous to the arc portion and is formed to extend in a direction different from a direction of the straight portion, and
the peel-off portion as the bonding face is configured by the straight portion, the arc portion and the inclined portion, or the straight portion, the arc portion and a part of the inclined portion on a side of the arc portion.

3. The rotating electrical machine according to claim 1 or 2, wherein, in the segment conductor bonded to the segment conductor including the arc portion, the coated portion and the peel-off portion are formed in a linear shape in the axial direction in a welding-side coil end.

4. The rotating electrical machine according to claim 2, wherein the segment conductor including the oblique portion is a connecting wire and connects two segment conductors other than the segment conductor.

5. The rotating electrical machine according to any one of claims 1 to 4, wherein a peel-off length of a face other than the bonding face is shorter than a peel-off length of the bonding face.

6. The rotating electrical machine according to claim 5, wherein the peel-off portions are disposed on the bonding faces on which the peel-off portions face each other and other faces parallel to the bonding faces.
